# EUROPÄISCHE PATENTSCHRIFT

(11) **EP 4 024 675 B1**
(45) Veröffentlichungstag und Bekanntmachung des Hinweises auf die Patenterteilung: **10.07.2024**
(21) Anmeldenummer: 21217942.8
(22) Anmeldetag: 28.12.2021
(51) Int. Cl.: H02K 5/128, H02K 17/16, H02K 3/02, H02K 5/02, B01F 35/513

(54) **SINGLE-USE ROTOR MIT KURZSCHLUSSKÄFIG**
SINGLE-USE ROTOR WITH SHORT CIRCUIT CAGE
ROTOR À USAGE UNIQUE POURVU DE CAGE EN COURT-CIRCUIT

(30) Priorität: 28.12.2020 EP 20217458
(43) Veröffentlichungstag der Anmeldung: 06.07.2022
(73) Patentinhaber: Pink, Tomas, 6215 Beromünster (CH)
(72) Erfinder: Pink, Tomas, 6215 Beromünster (CH)
(74) Vertreter: Raffay & Fleck

(56) Entgegenhaltungen:
- EP-A1- 3 115 103
- EP-A1- 3 232 549
- DE-A1- 102015 009 895
- GB-A- 1 287 145

## Beschreibung

Die Erfindung betrifft einen Rotor für "Single-Use" Anwendungen. Ein solcher kann beispielsweise im Rahmen eines Rührers oder einer Pumpe Verwendung finden. "Single-Use" Anordnungen finden in der chemischen und pharmazeutischen Industrie und Forschung eine immer größere Anwendung. Sie unterscheiden insbesondere dadurch von klassischen Anordnungen, dass sie nur eine beschränkte Lebensdauer haben und insbesondere nicht auf grenzwertig gereinigt sondern stattdessen entsorgt, insbesondere verbrannt werden. Insbesondere auch dann, wenn in dieser Anordnungen hochaktive, gefährliche oder bioaktive Stoffe verarbeitet oder hergestellt werden. "Single-Use" Anordnungen sollen sich daher dadurch auszeichnen, dass sie ohne Probleme und mit geringen Wertverlusten verbrannt werden können. Dabei wird auch Wert darauf gelegt, dass zwischen einmal Teilen und solchen Teilen, die seinen mehrfachen Gebrauch mit einmal Teilen kombiniert werden können, unterschieden wird. So werden beispielsweise Gestelle oder Versorgungselemente wiederverwendet, während darin gelagerte oder damit betriebene Teile als "Single-Use"-Komponenten ausgeführt werden, und nach einmaliger Verwendung verbrannt werden.

Derartige Bioreaktoren mit Rührer sind beispielsweise aus der EP 3 241 608 A1 oder EP 3 241 609 A1 bekannt. Dort wird ein mit Permanentmagneten ausgestatteter Rührer der innerhalb des Einmalbehälters angeordnet ist, durch ein au-βen erzeugtes Magnetfeld angetrieben. Ein klassischer metallischer Bioreaktor, der eine Induktionsscheibe am Rotor verwendet, ist aus der JPS5952519A bekannt.

Die DE 10 2015 009 895 A1 zeigt einen Behälter mit Rührwerk und zeigt dabei verschiedene Antriebs- und Lagerungsvarianten. Darunter zu finden ist auch eine Ausführungsform mit einem Innenläufer.

Aus der EP 3 232 549 A1 sind zudem die Verwendung eines scheibenförmigen Rotors ohne Permanentmagneten mit einem Tempelmotor aufweisend einen paramagnetischen Kern sowie in einer weiteren Ausführungsform ein permanentmagnetischer scheibenförmiger Rotor bekannt. Aus der DE 69810130 T2 ist eine Permanentmagnetisch gelagerte Pumpe bekannt. EP 3 115 103 A1 offenbart ein Rührwerk und einen Single-Use-Behälter. GB 1 287 145 A offenbart einen Rotor aufweisend einen Kurzschlusskäfig, wobei der Rotor ein mit seiner Achse gekoppeltes Fluidbewegungsmittel aufweist, wobei der Kurzschlusskäfig als Außenläufer und zur umschließenden Aufnahme einer Vorrichtung zur Erzeugung eines rotierenden elektromagnetischen Felds ausgebildet ist. Der Rotor ist kein Single-Use-Rotor. Es gibt keinen Kunststoffkörper zur drehsteifen Koppelung des Kurzschlusskäfigs mit der Achse. Die Erstreckung des Kurzschlusskäfigs in Richtung der Achse ist kleiner als 50 % des Innendurchmessers des Kurzschlusskäfigs.

Aufgabe der vorliegenden Erfindung ist es, einen entsprechenden Rotor bzw. eine Anordnung mit einem solchen Rotor bzw. eine entsprechende Verwendung dahingehend zu verbessern, dass bei hoher Antriebseffizienz die Herstellung eines solchen Rotors kostengünstiger und/oder Ressourcen schonender erfolgen kann. Auch soll der Wertverlust durch die Verbrennung reduziert werden.

Die Aufgabe wird erfindungsgemäß gelöst durch einen Rotor nach Anspruch 1, einem Behälter nach Anspruch 10 und einem Rührwerk nach Anspruch 15. Weitere Ausgestaltungsformen der Erfindung sind in den abhängigen Ansprüchen 2 - 9 und 11 - 14 definiert.

Der erfindungsgemäße Rotor weist mindestens eine Achse und mindestens einen Kurzschlusskäfig auf, wobei der Kurzschlusskäfig elektrisch leitende Stäbe und zumindest zwischen den Stäben angeordnetes ferromagnetisches Material, insbesondere mindestens ein Blechpaket, aufweist und wobei der Rotor mindestens mit der mindestens einen Achse gekoppeltes Fluidbewegungsmittel zur Übertragung der Rotationsbewegung auf eine Fluid aufweist, wobei die Achse mittels mindestens eines Materialkörpers, nämlich mindestens eines Kunststoffkörpers, mit dem Kurzschlusskäfig drehsteif gekoppelt ist, wobei der Kurzschlusskäfig als Außenläufer ausgebildet ist, zur umschließenden Aufnahme einer Vorrichtung zur Erzeugung mindestens eines rotierenden elektromagnetischen Felds ausgebildet ist, wobei die Erstreckung des Kurzschlusskäfig in Richtung der Achse größer ist als 50%, insbesondere größer als 85%, des Innendurchmesser des Kurzschlusskäfigs.

Mit Vorteil ist die Erstreckung des Kurzschlusskäfig in Richtung der Achse größer als 1 mm/Nm mal das Nenndrehmoment des Rotors, insbesondere größere ist als 3 mm/Nm mal das Nenndrehmoment des Rotors.

Das Nenndrehmoment ist insbesondere das maximal zulässige Dauerdrehmoment, das der Rotor ausüben und/oder das auf ihn einwirken darf und/oder das maximale vom Rotor ausgeübte und/oder auf ihn einwirkende Dauerdrehmoment, bei dem noch keine Schädigung des Rotors eintritt.

Erst durch eine solche Ausgestaltung lässt sich, insbesondere bei Verzicht auf Permanentmagnete, ein hoher Wirkungsgrad, ein großes Drehmoment für die Drehung des Rotors und eine vertretbare maximale Stromstärke und/oder Verlustleistung erzielen, was mit bekannten Ausgestaltungen nicht möglich ist.

Der Rotor ist insbesondere ausgebildet, mit einem Stator als Asynchronmaschine genutzt zu werden.

Der Rotor ist nicht-permanentmagnetisch ausgebildet. Er weist insbesondere keine Permanentmagneten auf. Vorteilhafterweise ist in den Kurzschlusskäfig ferromagnetisches Material eingebracht, dass insbesondere zumindest zwischen den Kurzschlusskäfig ausbildende Stäbe angeordnet ist, diese, insbesondere im oder in allen Querschnitt(en) senkrecht zur Achse, insbesondere an mindestens drei Seiten, insbesondere mehr als drei Seiten umschließt. Dadurch lässt sich die Verlustleistung reduzieren und/oder das Drehmoment erhöhen.

Insbesondere ist der Kurzschlussläufer gebildet aus Aluminium und Stäben und elektrisch verbindenden Ringen. Insbesondere weisen die Stäbe eine Neigung im Bereich von 2 bis 8° gegen die zur Drehachse parallele Senkrechte auf der Umfanglinie, auf der der jeweilige Stab angeordnet ist, auf.

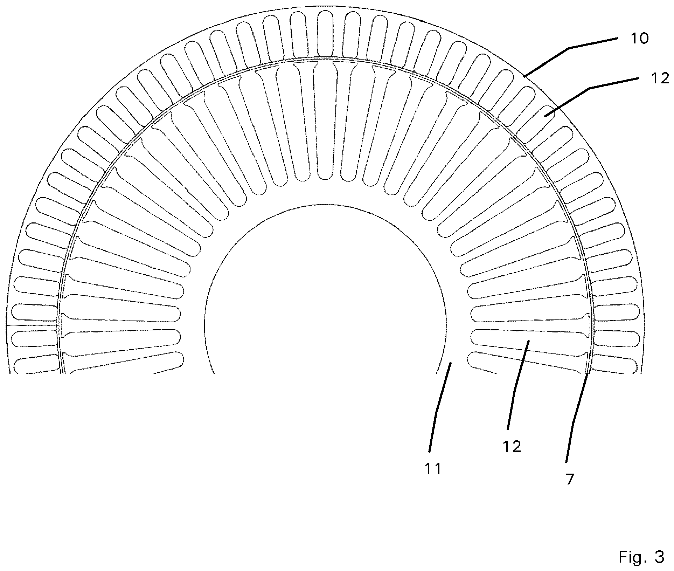

Insbesondere sind in den Kurzschlusskäfig ferromagnetische Bleche, insbesondere in Form wie in Fig. 3 ausschnittsweise gezeigt eingelegt, die insbesondere ein Blechpaket ausbilden. Dabei kommt es nicht auf die absolute Größe, sondern auf die Formgebung an sich an. Insbesondere weisen die Bleche je Aussparungen für leitfähige Stäbe auf, um diese Stäbe senkrecht durch die flächige Erstreckung der Bleche zu führen. Insbesondere weisen die Bleche je eine ringförmige Ausbildung auf, in die die Aussparungen so eingebracht sind, dass die Bleche rotationssymmetrisch sind, insbesondere mit einer Kennzahl gleich der Anzahl der Aussparungen. Die Aussparungen sind im Blech insbesondere so ausgebildet, dass sie radial gesehen jeweils eine größere, insbesondere eine um mehr als den Faktor zwei, insbesondere drei, größere, Erstreckung aufweisen als in Umfangrichtung. Sie sind insbesondere angrenzend an die innere kreisförmige Begrenzung des als Ring ausgeführten Blechs angeordnet, insbesondere so, dass die Aussparungen sich in den im Ring gebildeten Kreis erstrecken und/oder die innere Begrenzung des Rings ausschneiden. Dabei sind sie insbesondere so angeordnet, dass sie sich zum inneren Umfang des Rings hin verjüngen. Auch sind sie insbesondere zum äußeren Umfang hin sich verjüngend, insbesondere abgerundet, ausgebildet. Insbesondere sind sie so angeordnet, dass zwischen ihrem zum äußeren Umfang hin orientierten Ende und dem äußeren Umfang ein Steg des Blechs vorhanden ist, der insbesondere in radialer Richtung schmaler ist, insbesondere um mehr als den Faktor zwei, insbesondere drei, schmaler ist als seine Erstreckung und/oder die Erstreckung der Aussparung in radialer Richtung. Insbesondere sind die Aussparungen in einem Rotorblech jeweils in ihrer Form und Größe alle identisch ausgebildet. Insbesondere sind die Aussparungen so ausgebildet, dass sich zwischen zwei benachbarten jeweils ein Steg befindet, der in Umfangsrichtung insbesondere schmaler ist als die an ihn angrenzenden Aussparungen und/oder der radial nach außen eine, abgesehen von einem inneren Bereich, der insbesondere maximal 10% seiner Längserstreckung ausmacht, zunehmende, insbesondere stetig, insbesondere streng monoton, zunehmende, Breite aufweist. Die Stege bilden im inneren Bereich insbesondere T-förmige Anker aus. Insbesondere ist eine Vielzahl von, insbesondere sind alle, aufeinander gestapelten Blechen identisch ausgebildet. Insbesondere fluchten ihre Aussparungen.

Insbesondere weist der Rotor eine Nuten- und/oder Stabanzahl je im Bereich von 0,1 bis 1 pro mm Innendurchmesser des Rotors und/oder absolut gesehen je im Bereich von 10 bis 300.

Insbesondere weist der Kurzschlusskäfig mindestens 6, insbesondere mindestens 20, Nuten und/oder Stäbe auf. Insbesondere weist der Rotor und/oder der Kurzschlusskäfig eine Rotationssymmetrie, insbesondere mit einer Kennzahl größer als 6, insbesondere größer als 20, auf.

Insbesondere ist der Rotor eingerichtet, als Teil eines Außenläufer-Asynchronmotors eine Nennleistung aufzubringen und/oder liegt sein Nenndrehmoment im Bereich von 2 bis 100 Nm.

Mit Vorteil ist/sind die Achse und/oder der Kunststoffkörper aus "Single-Use"-Material, insbesondere aus Kunststoff, gebildet. Als Kunststoff kommt beispielsweise in Betracht Polypropylen, Polyethylen, Polyvinylacetat, Polyethylvinylacetat, PEEK, PET, Polyamide und Polyimide.

Ebenfalls gelöst wird die Aufgabe durch einen Behälter nach Anspruch 10, nämlich einen "Single-Use"-Behälter zur Aufnahme von Fluid in einem inneren Hohlraum, insbesondere mit mindestens einer, insbesondere öffenbar und/oder verschließbaren Öffnung in das Innere, insbesondere zum Anschluss eines Schlauchs oder mit einem Schlauch.

Wenn der Kurzschlusskäfig um den Spalttopf angeordnet ist, ist der Spalttopf insbesondere zumindest teilweise oder vollständig in dem Kunststoffkörper aufgenommen und/oder liegt dieser umlaufend um den Spalttopf, insbesondere mit einem Abstand von weniger als 5mm an.

Gelöst wird die Aufgabe auch durch ein Rührwerk nach Anspruch 15, wobei außerhalb des inneren Hohlraums des Behälters mindestens eine, insbesondere nicht-permanentmagnetische, Vorrichtung zur Erzeugung mindestens eines rotierenden elektromagnetischen Felds, insbesondere mindestens eine Induktionsspule oder ein ferromagnetischer Kern mit Induktionsspule, in dem Spalttopf und in dem Kurzschlusskäfig angeordnet ist.

Dabei ist das Rührwerk, dadurch gekennzeichnet, dass sich zwischen Rotor und der mindestens einen Vorrichtung zur Erzeugung mindestens eines rotierenden elektromagnetischen Felds senkrecht zur Achse ein Abstand im Bereich von 1 bis 5 mm, insbesondere 1,25 bis 2 mm, befindet, in dem der Spalttopf angeordnet ist und/oder der Spalttopf senkrecht zur Achse eine Materialstärke im Bereich von 0,75 bis 2,5 mm, insbesondere von 1 bis 1,5 mm, aufweist und dass der Kurzschlusskäfig als Außenläufer zur umschließenden Aufnahme der Vorrichtung zur Erzeugung mindestens eines rotierenden elektromagnetischen Felds, insbesondere der mindestens einen Induktionsspule oder dem ferromagnetischen Kern mit Induktionsspule, ausgebildet ist.

Durch die Ausgestaltung mit derartigen Abständen lässt sich ein hoher Wirkungsgrad und ein großes Drehmoment für die Drehung des Rotors und des Fluidbewegungsmittels bewirken, auch wenn eine zuverlässige und belastbare Abdichtung und eine einfache Auswechselbarkeit des Behälters bzw. Spalttopfs und/oder Rotors gegeben sein muss, was mit bekannten Ausgestaltungen nicht möglich ist.

Die Vorrichtung ist dabei bevorzugt nicht-permanentmagnetisch, mit Vorteil ist sie ferromagnetisch, weist sie insbesondere einen ferromagnetischen Kern auf, der insbesondere mit Spulenwicklungen umgeben ist. Die Vorrichtung ist insbesondere ein Stator, insbesondere einer Asynchronmaschine.

Insbesondere ist der Stator gebildet aus einem ferromagnetischen Blechpaket, das Nuten aufweist, in denen sich Windungen von leitfähigen Spulen befinden.

Insbesondere weist der Stator eine Nutenanzahl im Bereich von 0,05 bis 1 pro mm Außendurchmesser, insbesondere im Bereich von 0,05 bis 0,5 pro mm Au-ßendurchmesse des Stators und/oder absolut gesehen im Bereich von 10 bis 300 Stück, auf.

Insbesondere weist der Stator mindestens 6 Nuten auf. Insbesondere weist der ferromagnetische Kern des Stators und/oder der Stator eine Rotationssymmetrie, insbesondere bzgl. des ferromagnetischen Kerns mit einer Kennzahl größer als 6 und/oder bzgl. des Stators mit einer Kennzahl größer als oder gleich vier, auf.

Insbesondere ist der ferromagnetische Kern des Stators durch aufeinander gestapelte ferromagnetische Bleche und/oder ein Blechpaket gebildet und/oder weist er dies auf. Insbesondere weist er Nuten, die insbesondere durch, insbesondere fluchtende, Aussparungen in den Blechen gebildet werden, auf, in denen sich Windungen von elektrischen Leitern erstrecken. Die Bleche weisen insbesondere eine Form wie in Fig. 3 ausschnittsweise gezeigt auf. Dabei kommt es nicht auf die absolute Größe, sondern auf die Formgebung an sich an. Insbesondere weisen die Bleche je Aussparungen für Windungen elektrischer Leiter, insbesondere zur Ausbildung von Spulen, auf. Insbesondere erstrecken sich die Aussparungen im Blechpaket durch das Blechpaket hindurch. Insbesondere weisen die Bleche je eine ringförmige Ausbildung auf, in die die Aussparungen so eingebracht sind, dass die Bleche jeweils rotationssymmetrisch sind, insbesondere mit einer Kennzahl gleich der Anzahl der Aussparungen. Die Aussparungen im Blech sind je insbesondere so ausgebildet, dass sie radial gesehen jeweils eine größere, insbesondere eine um mehr als den Faktor drei, insbesondere vier, größere, Erstreckung aufweisen als in Umfangrichtung. Sie sind insbesondere angrenzend an die äu-ßere kreisförmige Begrenzung des als Ring ausgeführten Blechs angeordnet, insbesondere so, dass die Aussparungen sich in den vom Ring gebildeten Außenkreis erstrecken und/oder die äußere Begrenzung des Rings aus-/anschneiden. Dabei sind sie insbesondere so angeordnet, dass sie sich zum inneren Umfang des Rings hin verjüngen und/oder zum äußeren Umfang des Rings hin verjüngen. Insbesondere ist die Verjüngung jeweils stetig, insbesondere ist sie zum inneren Umfang hin über eine längere radiale Erstreckung, insbesondere über mindestens 50% der radialen Erstreckung der Aussparung, gegeben. Insbesondere sind die Aussparungen so ausgebildet und angeordnet, dass zwischen zwei benachbarten Aussparungen jeweils ein Steg ausgebildet ist. Die Stege verjüngen sich, abgesehen von einem äußeren Bereich, der höchstens 10% ihrer radialen Erstreckung und/oder der radialen Erstreckung der Aussparungen einnimmt, insbesondere zum inneren Umfang des Rings hin, insbesondere stetig, insbesondere streng monoton. Die Stege bilden insbesondere jeweils einen T-förmigen Anker aus. Insbesondere ist eine Vielzahl von, insbesondere sind alle, Bleche des Stators identisch ausgebildete. Die Bleche sind insbesondere so angeordnet, dass ihre Aussparungen fluchten.

Auch sind die Aussparungen insbesondere zum inneren Umfang hin sich verjüngend, insbesondere abgerundet, ausgebildet. Insbesondere sind sie so angeordnet, dass zwischen ihrem zum inneren Umfang hin orientierten Ende und dem äußeren Umfang ein Steg des Blechs vorhanden ist, der insbesondere in radialer Richtung schmaler ist, insbesondere um mehr als den Faktor vier, insbesondere fünf, schmaler ist als seine Erstreckung und/oder die Erstreckung der Aussparung in radialer Richtung. Insbesondere sind die Aussparungen in einem Blech jeweils in ihrer Form und Größe alle identisch ausgebildet. Insbesondere sind die Aussparungen so ausgebildet, dass sich zwischen zwei benachbarten jeweils ein Steg befindet, der in Umfangsrichtung insbesondere schmaler ist als die an ihn angrenzenden Aussparungen und/oder der radial nach außen hin eine, abgesehen von einem äußeren Bereich, der insbesondere maximal 10% seiner Längserstreckung ausmacht, zunehmende, insbesondere stetig zunehmende, Breite aufweist.

Dadurch lässt sich die Stromstärke und die Verlustleistung möglichst gering halten.

Insbesondere ist der durch Stator und Rotor gebildete Antrieb eingerichtet, als Teile eines Asynchronmotor eine Nennleistung aufzubringen und/oder liegt sein Nenndrehmoment im Bereich von 2 bis 100 Nm und/oder seine elektrische und/oder mechanische Leistung im Bereich von 50 bis 5000 W.

Bei einer Verwendung eines Kurzschlusskäfigs innerhalb eines erfindungsgemäßen Rotors ist dieser drehsteif mit der mindestens einen Achse gekoppelt. Dabei ist mindestens ein Fluidbewegungsmittel zur Übertragung der Rotationsbewegung auf eine in dem erfindungsgemäßen Behälter, in dem sich der Rotor befindet, befindliche Fluid, vorgesehen. Das Fluidbewegungsmittel ist, insbesondere rotativ, insbesondere drehsteif, mit der Achse gekoppelt. Die Verwendung ist dabei eine solche zur Einbringung von Bewegung in das in dem Behälter befindliche Fluid mittels mindestens eines außerhalb des Behälters mittels der mindestens einen Vorrichtung zur Erzeugung mindestens eines rotierenden elektromagnetischen Feldes, insbesondere Stator einer Asynchronmaschine, erzeugten und auf den Kurzschlusskäfig einwirkenden rotierenden elektromagnetischen Felds.

Auch für den Stator gelten oben ausgeführte vorteilhafte Weiterbildungen ebenso.

Die Kopplung zwischen Achse und Fluidbewegungsmittel ist dabei insbesondere so ausgebildet, dass bei Drehung der Achse das Fluidbewegungsmittel bewegt wird, insbesondere auf einer Kreisbahn, und/oder das Fluidbewegungsmittel rotiert. Dies kann beispielsweise auch mittels Zahnrändern, Ketten, Schnecken und/oder Riemen erfolgen.

Unter "Single-Use"-Material wird in dieser Schrift ein Material oder eine Materialmischung verstanden, die bei einer Entsorgung, insbesondere Deponierung und/oder Verbrennung, insbesondere bei Verbrennung bei Temperaturen im Bereich von 800-11 50°C, insbesondere 800°C und 900°C, und/oder bei der Wirbelschichtfeuerung und/oder Rostfeuerung, keine gefährlichen Nebenprodukte oder Emissionen freigeben und entweder Rückstandslos verbrennen und/oder zerfallen oder nur Rückstände hinterlassen, die unbedenklich für Mensch und Umwelt sind und/oder solche die die Anforderungen der BlmSchG, der BlmSchV und/oder Industrial Emissions Directive 2010/75/EU (Integrated Pollution Prevention and Control) in der zum Anmeldezeitpunkt letzten und/oder gültigen Fassung, insbesondere bei Verbrennung bei Temperaturen im Bereich von 800-11 50°C, insbesondere 800°C und 900°C, und/oder bei der Wirbelschichtfeuerung und/oder Rostfeuerung erfüllen. Bevorzugt beinhalten sie keine seltene Elemente oder anders wertvolle Materialien, insbesondere keine seltene oder wertvolle Materialien, deren Wert durch die Hitzeeinwirkung um mehr als 50% reduziert wird, insbesondere keine Permanentmagnete. Bevorzugt handelt es sich um Kunststoff, Emaille, Keramik, Stahl, Wolframkarbid, Titannitrid, Aluminiumoxid, Metall- und Halbmetall-Nitride, Metall-Carbide, Metall- und Halbmetall-Oxide, Glas- und/oder Kohlenstoffverbundwerkstoff, Glas- und/oder Kohlenstofffasern, Aramid, Aramidharz und/oder Aluminium und Aluminiumlegierungen, Magnesiumlegierungen, bevorzugt um Kunststoff.

Als Kunststoff kommt beispielsweise in Betracht Polypropylen, Polyethylen, Polyvinylacetat, Polyethylvinylacetat, PEEK, PET, Polyamide und Polyimide.

Die Verwendung eines Kurzschlusskäfigs ermöglicht es, in "Single-Use" Anwendungen auf Permanentmagnete zu verzichten. Zudem ermöglicht sie es, den Metalleinsatz zu reduzieren. Dies ist insbesondere dann vorteilhaft, wenn der Kurzschlusskäfig an sich nicht die notwendige Stabilität aufweist, die induzierten Kräfte aufzunehmen und/oder weiterzuleiten. Dazu werden insbesondere preiswertere Materialien, beispielsweise Kunststoff eingesetzt, um den Kurzschlusskäfig zu stabilisieren und die in ihm induzierten Kräfte aufzunehmen und/oder weiterzuleiten. Zwar sind Kurzschlusskäfige in Elektromotoren an sich bekannt, so beispielsweise aus der US2013033144A1, doch ist deren Verwendung in "Single-Use" Anwendungen weder bekannt noch naheliegend. Sie bieten hier große Vorteile auf Grund der nur kurzzeitigen Verwendung und einer besonders guten Drehmomenterzeugung. Das Volumenverhältnis von Kurzschlusskäfig und "Sin-gle-Use"-Kunststoffkörper liegt insbesondere im Bereich von 1:10 bis 10:1.

Der Rotor, der Behälter, und das Rührwerk enthält insbesondere keine Permanentmagnete. Der Kurzschlusskäfig umfasst insbesondere eine Mehrzahl von metallischen Stäben, die insbesondere parallel zu einander und/oder auf einer Kreislinie und/oder einem Kegelmantel angeordnet sind und/oder mindestens ein, insbesondere mehrere, Stäbe, die mit metallischen Elementen, insbesondere Ringen elektrisch leitend verbunden sind.

Der Kurzschlusskäfig umfasst insbesondere keine Scheibe. Insbesondere ist der Kurzschlusskäfig ausschließlich aus lang gestreckten Elementen aufgebaut.

Es wird also insbesondere ein Behälter verwendet, der mindestens eine Gefäßwandung aufweist, die einen inneren Hohlraum umschließt. Dabei können Öffnungen vorgesehen sein, beispielsweise um Fluid in den inneren Hohlraum einzuführen und/oder aus diesem zu entnehmen. Die Öffnungen sind insbesondere so ausgestaltet, dass sie verschließbar sind, mit einem Verschlusselement verschlossen sind und/oder Anschlüsse für den Anschluss von Leitungen darstellen. Die Öffnungen nehmen dabei insbesondere nur einen geringen Teil der Oberfläche der Gefäßwandungen ein, insbesondere weniger als 20 % der Gefäßwandungen. Es handelt sich bei den Öffnungen insbesondere um verschließbare und/oder verschlossene Öffnungen.

Die Gefäßwandung weist dabei einen Spalttopf auf und ist aus "Single-Use"-Material gebildet, nämlich aus Kunststoff. Spalttöpfe sind aus der Stand der Technik bekannt, so beispielsweise aus der EP2932102B1 und ermöglichen insbesondere die effiziente Kopplung von Rotor und Stator bei sicherer Gewährleistung einer Fluidbarriere. Sie stellen also insbesondere eine Ausbuchtung der Gefäßwand da, die dennoch eine Fluidbarriere darstellt und ermöglichen zudem insbesondere das möglichst ungeschwächte Durchdringen magnetischer oder elektromagnetischer Felder.

Der Rotor ist insbesondere im Inneren des Hohlraums so angeordnet, dass sein Kurzschlusskäfig um den Spalttopf liegt. Insbesondere ist der Rotor so angeordnet, dass er im Behälter drehbar gelagert ist. Außerhalb des Hohlraums ist eine Vorrichtung zur Erzeugung elektromagnetischer Felder, insbesondere unmittelbar angrenzend an, in den Spalttopf angeordnet. Dazu ist Bevorzugt unmittelbar an, in und/oder um den Spalttopf mindestens eine Induktionsspule und oder mindestens ein ferromagnetischer Kern angeordnet. Die Vorrichtung zur Erzeugung magnetischer Felder kann dabei ganz oder teilweise Bestandteil des Behältnisses sein, insbesondere mit diesem fest verbunden sein, oder separat so angeordnet sein, dass der Spalttopf daraus zerstörungsfrei entnehmbar und darin einsetzbar ist. So kann beispielsweise ein wiederverwendbares Teil geschaffen sein, dass eine Aussparung aufweist, in die der Spalttopf einsetzbar ist und die so ausgebildet ist, dass an der Aussparung die mindestens eine Induktionsspule und/oder der mindestens ein ferromagnetischer Kern angeordnet ist, um bei eingesetztem Spalttopf und darin befindlichen Kurzschlusskäfig den Rotor mittels der Induktionsspule und/oder dem ferromagnetischen Kern anzutreiben.

Der Rotor weist dabei ein Fluidsbewegungsmittel auf, um die in den Rotor eingebrachte Rotation zu nutzen, Bewegung in die im inneren des Hohlraums befindliche Fluid zu bringen. Dies kann beispielsweise zur Durchmischung, zur Dispersion über Homogenisierung und/oder Förderung der Fluid erfolgen. Dementsprechend ist das mindestens eine Fluidsbewegungsmittel insbesondere zur Durchmischung, Dispersion, zur Homogenisierung und/oder Förderung von Fluid ausgebildet. Der Rotor und/oder der Behälter mit Rotor können nach der Verwendung verbrannt werden. Im Gegensatz zum bekannten Vorgehen werden dabei keine Permanentmagnete zerstört und kann auch der Einsatz von Metall weitmöglichst reduziert werden, indem der Kurzschlusskäfig so ausgebildet wird, dass er nicht geeignet ist, die in ihm induzierten Kräfte ohne Verformung und oder Zerstörung aufzunehmen und stattdessen ein günstigeres "Single-Use"-Material, nämlich Kunststoff, verwendet wird, um den Kurzschlusskäfig zu stabilisieren.

Mit besonderem Vorteil ist der Kurzschlusskäfig an mindestens einer Seite, insbesondere innen und/oder außen von dem mindestens einen Kunststoffkörper umgeben, insbesondere in diesem aufgenommen und/oder vollständig von diesem umgeben. Mit Vorteil ist der Kurzschlusskäfig im mindestens einen Kunststoffkörper, insbesondere vollständig, aufgenommen und/oder von diesem gemantelt und/oder stabilisiert der mindestens eine Kunststoffkörper den Kurzschlusskäfig mechanisch und/oder isoliert er ihn elektrisch. Dann kann der Kurzschlusskäfig beispielsweise mit Kunststoff umgestürzt werden. Mit besonderem Vorteil kann die Herstellung des Kurzschlusskäfigs und/oder des Kunststoffkörpers oder sogar des ganzen Rotors durch 3D Druck, insbesondere in einem einzigen Druckverfahren und/oder einem einzigen Druck und/oder gemeinsam, erfolgen. Dadurch ist es insbesondere möglich, absondert materialsparend zu arbeiten, da auf diese Weise besonders einfach materialschwingend und Aussparung umsetzbar sind, um den Materialeinsatz bei gegebener Stabilität zu reduzieren. Mit besonderem Vorteil kann der Kunststoffkörper ein Körper ausschließlich aus "Single-Use"-Material sein.

Mit Vorteil ist der Kurzschlusskäfig aus "Single-Use"-Material, Metall, Metalloxid, Aluminium, Aluminiumlegierung, Stahl, Edelstahl, Zink, Magnesium, Magnesiumlegierungen, Kohlenstoff, Silizium und/oder Kupfer gebildet. Derartige Materialien haben sich in Bezug auf die effiziente Rotationserzeugung und den Ressourceneinsatz besonders geeignet erwiesen. Mit besonderem Vorteil weist der Behälter außer im Kurzschlusskäfig kein Metall auf.

Unter Fluid ist insbesondere ein Gas oder eine Flüssigkeit und/oder ein Gemisch aus Gas und Flüssigkeit, und/oder ein Gemisch aus Gas und Aerosol zu verstehen.

Mit Vorteil ist der Kurzschlusskäfig elektrisch isoliert und/oder in einer elektrisch isolierenden Schicht gekapselt ausgeführt, wobei die elektrische Isolation insbesondere durch eine Metallnitridschicht, Plastik, Emaille, Nitride, Oxide, Karbide und/oder Glas realisiert ist. Dies führt zu einer höheren Sicherheit. Metallnitrid als elektrisch isolierende Schicht hat sich als besonders ressourcenschonend und effizient erwiesen.

Mit besonderem Vorteil sind die mindestens eine Achse und der mindestens eine Kunststoffkörper und insbesondere auch das mindestens eine Fluidbewegungsmittel gemeinsam einteilig ausgeführt. Dies ermöglicht eine besonders hohe Stabilität bei geringem Materialeinsatz. In einigen Aufführungsformen wird dabei bevorzugt, ein metallisches Element, beispielsweise eine metallische Achse, als Stabilisierung in die mindestens eine Achse und/oder den Kunststoffkörper aufzunehmen. So kann beispielsweise die mindestens eine Achse aus Kunststoff mit einem oder mehreren Metallkern(en) ausgeführt sein.

Mit Vorteil handelt es sich bei dem mindestens einen Fluidbewegungsmittel um mindestens ein Rührblatt, mindestens einen Rührflügel oder um mindestens eine Rühr- oder Förderschaufel, mindestens eine Schnecke oder mindestens einen Exzenter, mindestens einen Drehkolben oder um mindestens eine Spirale. Dadurch lassen sich unterschiedliche Anwendungsfelder erzielen. Mit besonderem Vorteil ist der Rotor als Rührwerk und/oder Pumpenrad und/oder Ventilatorrad und/oder Gebläserad ausgeführt.

Mit besonderem Vorteil weist der Rotor außer dem Kurzschlusskäfig und/oder einer Isolation des Kurzschlusskäfigs kein Metall und/oder Metalloxide auf und/oder ist er ausschließlich aus "Single-Use"-Material gefertigt und/oder weist er keine Permanentmagnete auf.

Bevorzugt weist der Rotor, insbesondere als Teil des Lagers, mindestens eine Lagerschale und/oder Lagerbuchse, insbesondere aus Keramik und/oder Kunststoff auf. Über diese kann er einfach im Behälter gelagert werden. Insbesondere ist das Lager ein Gleit- und/oder Wälzlager und/oder Kugellager und/oder ist es aus Keramik und/oder Kunststoff gebildet. Demnach ist die Lagerschale und/oder Lagerbuchse insbesondere Teil eines solchen Lagers. Insbesondere handelt es sich um Vollkeramiklager und/oder Vollplastiklager.

Mit Vorteil ist das Lager und/oder sind seine Teile so ausgebildet und/oder angeordnet, dass sie im inneren des Hohlraums angeordnet sind und insbesondere von diesem nicht durch Dichtelemente abgetrennt sind. In manchen Ausgestaltungen wird es bevorzugt, wenn das mindestens eine Lager und/oder seine Teile so angeordnet und ausgebildet sind, dass sie von einer im Hohlraum angeordneten Fluid um- und insbesondere durchspült werden und/oder durch diese feucht gehalten wird/werden. So kann eine Schmierung des Lagers durch die im Hohlraum befindliche Fluid erfolgen. In einer anderen Ausgestaltung ist das Lager und/oder sind seine Teile aber Bevorzugt so ausgebildet, dass sie auch trocken laufen können. Diese Arbeitsweise kann dann hilfreich sein, wenn Lager an einem oberen Ende des inneren Hohlraums angeordnet ist/sind und/oder werden und somit gegebenenfalls nicht von der im Hohlraum befindlichen Fluid kontaktiert werden, weil beispielsweise der Fluidstand nicht bis zu ihnen ragt.

In manchen Ausführungsformen wird es bevorzugt, dass der Behälter so ausgestaltet ist, dass das Entnehmen des Rotors aus dem inneren Hohlraum ohne Zerstörung der Gefäßwandungen nicht möglich ist und/oder wobei der Behälter nur solche Öffnungen aufweist, die im Querschnitt kleiner ausgestaltet sind als der Durchmesser des Rotors.

Bevorzugt ist der Rotor, insbesondere der Teil, der den Kurzschlusskäfig aufweist, nicht vom inneren Hohlraum getrennt und wird auch dieser bevorzugt von in dem Hohlraum befindlicher Fluid umspült. Mit besonderem Vorteil ist der Rotor nicht durch die Gefäßwand geführt, durchstößt diese also nicht.

Mögliche Ausgestaltungen der Erfindung sollen im Folgenden rein exemplarisch anhand der folgenden Figuren beschrieben werden. Dabei zeigen:
Figur 1: eine Aufsicht und einen Schnitt durch einen Rotor in einem Spalttopf mit außen angeordneten Induktionsspule (Beispiel zum Verständnis, nicht Ausführungsbeispiel der beanspruchten Erfindung) und
Figur 2: einen Schnitt durch einen erfindungsgemäßen Rotor in einem Spalttopf mit innen angeordneten Induktionsspule (Ausführungsbeispiel der beanspruchten Erfindung) und
Figur 3: Schnitt durch einen Stator und Rotor in der Ebene eines Stator- und Rotorblechs.

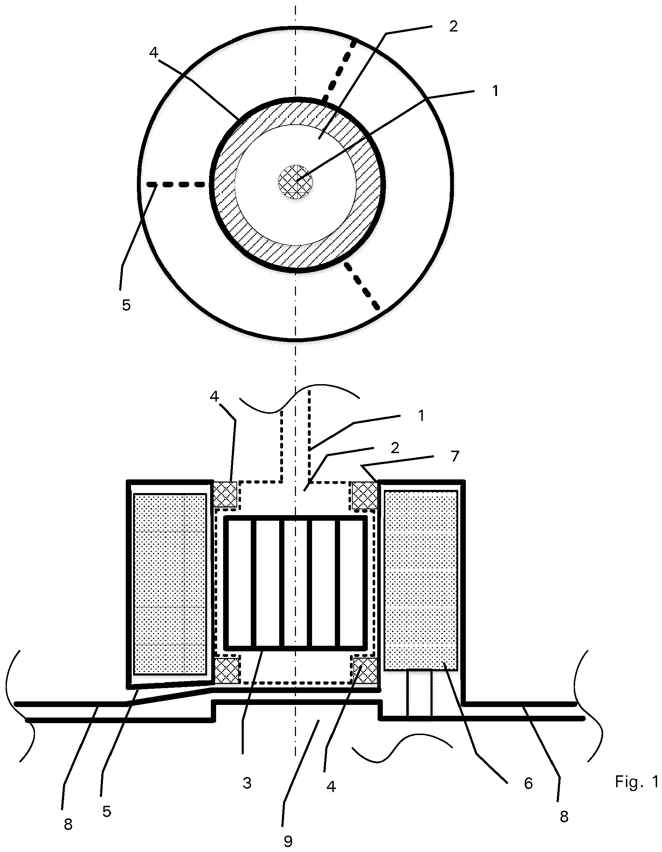

Figur 1 zeigt in der oberen Darstellung eine Aufsicht auf einen Rotor, wobei die Rühr Mittel nicht gezeigt sind. Zu erkennen ist in der Mitte eine Achse 1 und darum der daran drehsteif befestigte Kunststoffkörper 2 dieser ist gelagert über Lager 4. Der Spalttopf weist zudem Kanäle 5 auf.

In der unteren Darstellung ist ein Schnitt durch diese Anordnung zu erkennen. Dieser verdeutlicht die Zusammenhänge noch einmal klarer. Zu erkennen ist, dass die Achse 1 mit dem Kunststoffkörper 2 fest und drehsteif einteilig ausgeführt ist. Der Kunststoffkörper 2 umschließt hier den Kurzschlusskäfig 3 vollständig. Gut zu erkennen ist, dass der Kunststoffkörper 2 durch Lager 4 oben und unten im Spalttopf 7 gelagert ist. Die Gefäßwand 8 ist hier so ausgeführt, dass sie zunächst eine Einberufung in das Gefäß nach oben zeigt, die ringförmig umlaufend ausgeführt ist und sich der Spalttopf 7 von dort aus wieder nach unten erstreckt. In der ringförmigen Ausbuchtung ins Behälterinnere sind von außen Induktionsspule 6 angeordnet, die aus dem Induktionsspulensteuerungsgehäuse 9 nach oben vorstehen. In der ringförmigen Ausbuchtung sind zudem drei Kanäle 5 angeordnet, die einen besseren Fluidsaustausch zwischen Spalttopf und übrigem Innenraum des Gefäßes ermöglichen. Die linke Induktionsspule 6 ist genauso wie die Rechte mit dem Gehäuse 9 verbunden, was in dieser Darstellung jedoch nicht ersichtlich ist. Der Kurzschlusskäfig 3 ist in dieser Darstellung auch mit den hinter dem Schnitt liegenden Bestandteilen gezeigt. Er ist in der Aufsicht kreisrund ausgebildet mit einem oberen metallischen Ring und einem unteren metallischen Ring und dazwischen angeordneten metallischen Stäben, die in der unteren Ansicht der Figur in ihrer Längserstreckung von unten nach oben in der Zeichnung gut zu erkennen sind, ausgebildet.

Die in der Ausbuchtung angeordneten Induktionsspulen sind eingerichtet, ein elektromagnetisches Feld zu erzeugen und dadurch einen Induktionsstrom im Kurzschlusskäfig zu erzeugen und dadurch eine Rotation des Kurzschlusskäfigs und damit auch des Kunststoffkörpers 2 und der Achse 1 zu bewirken.

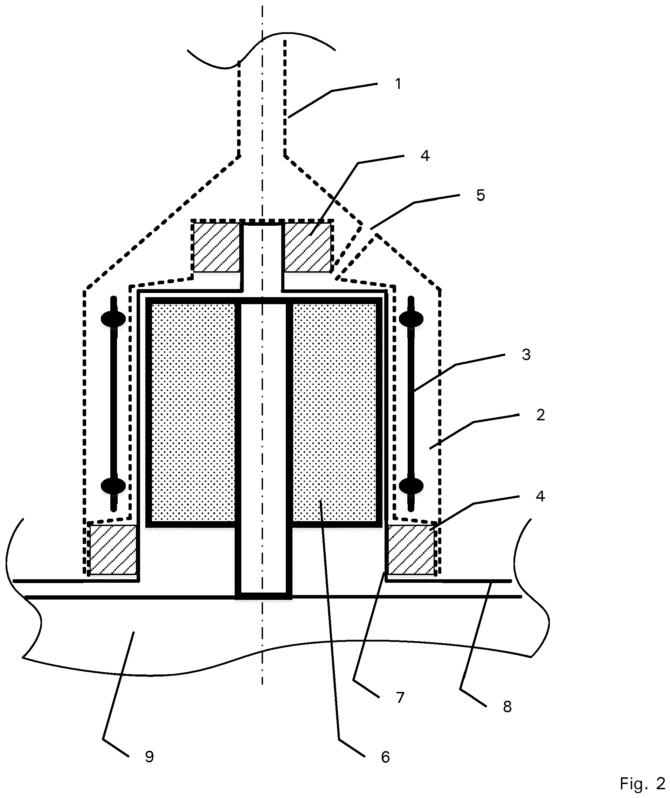

Figur 2 zeigt als Ausführungsbeispiel der beanspruchten Erfindung einen Schnitt durch eine ähnliche Anordnung, bei dem die Induktionsspulen jedoch innerhalb des Kurzschlusskäfigs 3 angeordnet sind. Zu erkennen ist auch hier eine Achse 1, die mit einem Kunststoffkörper 2 fest und drehsteif einteilig verbunden ist. Innerhalb des Kunststoffkörpers 2, und von diesem vollständig umschlossen, ist ein Kurzschlusskäfig 3 angeordnet, der ebenfalls gebildet ist durch parallele und im Kreis stehende Stäbe, die durch zwei ringförmige Elemente miteinander elektrisch verbunden sind. Auch hier weist die Gefäßwand 8 einen Spalttopf 7 auf, der sich jedoch lediglich vom Boden des Gefäßes kreisrund nach oben erstreckt. Von außen und somit hier von unten ist er wieder eine mit dem Induktionsspule Steuerungsgehäuse 9 verbundene Induktionsspule Anordnung 6 eingeschoben. Diese kommt somit innerhalb des Kurzschlusskäfigs 3 zu liegen. Der Kunststoffkörper 2 ist durch Lager 4, die mit dem Spalttopf fest verbunden sind, diesem gegenüber drehbar gelagert. Durch die Induktionsspule 6 kann nun ein Strom im Kurzschlusskäfig 3 induziert werden und mittels dessen wiederum ein Drehmoment im Kunststoffkörper 2 bewirkt werden.

Figur 3 zeigt einen Schnitt durch einen Stator und einen Rotor, in der Ebene eines Stator- und eines Rotorblechs. Dabei sind nicht alle Bestandteile einer erfindungsgemäßen Vorrichtung gezeigt. Insbesondere sind die Windungen der elektrischen Leiter des Stators nicht gezeigt. Auch ist nur ein Ausschnitt der Schnittebene gezeigt.

Zu erkennen ist im Inneren ein Ausschnitt eines ringförmigen Statorblechs 11. Es weist Aussparungen 12 auf. Die Windungen der elektrischen Leiter erstrecken sich durch eine Aussparung und eine weitere, nicht unbedingt direkt benachbarte Aussparung. Dabei sind die Windungen einer Spule immer durch zwei, insbesondere nicht direkt benachbarte, Aussparungen des Stators geführt.

Um den Stator herum ist der Spalttopf 7 zu erkennen. Er bildet eine schmale Flüssigkeits- und/oder Gasbarriere zwischen dem Statorblech 11 und dem angrenzenden Rotorblech 10. Auch das Rotorblech weist Aussparungen 12 auf, die durch senkrecht zur Schnittebene verlaufende Aluminiumstäbe des Kurzschlusskäfigs gefüllt sind.

### Bezugszeichenliste

| | | | |
|---|---|---|---|
| 1 | Achse | 6 | Induktionsspule |
| 2 | Kunststoffkörper | 7 | Spalttopf |
| 3 | Kurzschlusskäfig | 8 | Gefäßwand |
| 4 | Lager | 9 | Induktionsspulensteuerungsge-häuse |
| 5 | Kanal | | |
| 10 | Rotorblech | 12 | Aussparung |
| 11 | Statorblech | | |

## Patentansprüche

1. Single-use Rotor aufweisend mindestens eine Achse (1) und mindestens einen Kurzschlusskäfig (3), wobei der Kurzschlusskäfig (3) elektrisch leitende Stäbe und zumindest zwischen den Stäben angeordnetes ferromagnetisches Material, insbesondere mindestens ein Blechpaket, aufweist und wobei der Rotor mindestens ein mit der mindestens einen Achse (1) gekoppeltes Fluidbewegungsmittel zur Übertragung der Rotationsbewegung auf ein Fluid aufweist, wobei der Kurzschlusskäfig (3) nicht-permanentmagnetisch ausgebildet ist, wobei die Achse (1) mittels mindestens eines Kunststoffkörpers (2) mit dem Kurzschlusskäfig (3) drehsteif gekoppelt ist, wobei der Kurzschlusskäfig (3) als Außenläufer zur umschließenden Aufnahme einer Vorrichtung (6) zur Erzeugung mindestens eines rotierenden elektromagnetischen Felds ausgebildet ist, wobei die Erstreckung des Kurzschlusskäfig (3) in Richtung der Achse (1) größer ist als 50 % des Innendurchmessers des Kurzschlusskäfigs (3).

2. Rotor nach Anspruch 1, wobei der Kurzschlusskäfig (3) an mindestens einer Seite, insbesondere innen und/oder außen von dem mindestens einen Kunststoffkörper (2) umgeben ist, insbesondere in diesem aufgenommen und/oder vollständig von diesem umgeben ist.

3. Rotor nach Anspruch 1 oder 2, wobei der mindestens eine Kunststoffkörper (2) den Kurzschlusskäfig (3) mechanisch stabilisiert.

4. Rotor nach einem der vorstehenden Ansprüche, wobei der Kurzschlusskäfig (3) elektrisch isoliert und/oder in einer elektrisch isolierenden Schicht gekapselt ausgeführt ist, wobei die elektrische Isolation insbesondere durch eine Metallnitridschicht realisiert ist.

5. Rotor nach einem der vorstehenden Ansprüche, wobei die mindestens eine Achse (1) und der mindestens eine Kunststoffkörper (2) und insbesondere auch das mindestens eine Fluidbewegungsmittel gemeinsam einteilig ausgeführt sind.

6. Rotor nach einem der vorstehenden Ansprüche, wobei es sich bei dem mindestens einen Fluidbewegungsmittel um mindestens ein Rührblatt, mindestens einen Rührflügel, mindestens eine Rühr- oder Förderschaufel, mindestens eine Schnecke, mindestens einen Exzenter, mindestens einen Drehkolben oder um mindestens eine Spirale handelt.

7. Rotor nach einem der vorstehenden Ansprüche, wobei der Rotor außer dem Kurzschlusskäfig (3) und/oder einer Isolation des Kurzschlusskäfigs (3) kein Metall und/oder Metalloxide aufweist.

8. Rotor nach einem der vorstehenden Ansprüche, wobei der Rotor mindestens eine Lagerschale und/oder Lagerbuchse, insbesondere aus Keramik und/oder Kunststoff, aufweist.

9. Rotor nach einem der vorstehenden Ansprüche, wobei der Rotor ein Rührwerk und/oder ein Laufrad ist.

10. Single-Use Behälter zur Aufnahme von Fluid in einem inneren Hohlraum, insbesondere mit mindestens einer Öffnung in das Innere, insbesondere zum Anschluss eines Schlauchs oder mit einem Schlauch, wobei der Behälter eine Behälterwandung aus Kunststoff und einen Spalttopf (7) als Teil der Behälterwandung aufweist, wobei im inneren Hohlraum des Behälters, den Spalttopf (7) umschließend, ein Rotor nach einem der vorstehenden Ansprüche angeordnet ist, dessen Kurzschlusskäfig (3) um den Spalttopf (7) angeordnet ist, wobei der Spalttopf (7) eine Wandstärke im Bereich von 0,75 bis 2,5 mm, insbesondere von 1 bis 1,5 mm, aufweist, wobei die mindestens eine Achse (1) mittels mindestens eines im Behälter, insbesondere im inneren Hohlraum des Behälters, angeordneten Lagers mit dem Behälter drehbar gekoppelt ist.

11. Behälter nach dem vorstehenden Anspruch, wobei der Behälter so ausgestaltet ist, dass das Entnehmen des Rotors aus dem inneren Hohlraum ohne Zerstörung der Gefäßwandungen nicht möglich ist und/oder wobei der Behälter nur solche Öffnungen aufweist, die im Querschnitt kleiner ausgestaltet sind als der Durchmesser des Rotors.

12. Behälter nach einem der Ansprüche 10 oder 11, wobei das mindestens eine Lager ein Gleit- und/oder Wälzlager und/oder ein Kugellager ist und/oder aus Keramik und/oder Kunststoff gebildet ist.

13. Behälter nach einem der Ansprüche 10 bis 12, wobei der Rotor nicht vom inneren Hohlraum getrennt ist.

14. Behälter nach einem der Ansprüche 10 bis 13, wobei der Rotor die Gefäßwand nicht durchstößt.

15. Rührwerk aufweisend einen Behälter nach einem der Ansprüche 10 bis 14, wobei außerhalb des inneren Hohlraums des Behälters mindestens eine, insbesondere nicht-permanentmagnetische, Vorrichtung (6) zur Erzeugung mindestens eines rotierenden elektromagnetischen Felds, insbesondere mindestens eine Induktionsspule oder ein ferromagnetischer Kern mit Induktionsspule, in dem Spalttopf (7) und in dem Kurzschlusskäfig (3) angeordnet ist, wobei sich zwischen Rotor und der mindestens einen Vorrichtung (6) zur Erzeugung mindestens eines rotierenden elektromagnetischen Felds senkrecht zur Achse (1) ein Abstand im Bereich von 1 bis 5 mm, insbesondere 1,25 bis 2 mm, befindet, in dem der Spalttopf (7) angeordnet ist und/oder der Spalttopf (7) senkrecht zur Achse eine Materialstärke im Bereich von 0,75 bis 2,5 mm, insbesondere von 1 bis 1,5 mm, aufweist und dass der Kurzschlusskäfig (3) als Außenläufer zur umschließenden Aufnahme der Vorrichtung (6) zur Erzeugung mindestens eines rotierenden elektromagnetischen Felds, insbesondere der mindestens einen Induktionsspule und/oder dem ferromagnetischen Kern mit Induktionsspule, ausgebildet ist.

## Claims

1. A single-use rotor having at least one shaft (1) and at least one short-circuit cage (3), the short-circuit cage (3) having electrically conductive rods and ferromagnetic material arranged at least between the rods, in particular at least one laminated core, and the rotor having at least one fluid movement means coupled to said at least one shaft (1) for transmitting the rotational movement to a fluid, the short-circuit cage (3) being designed to be non-permanently magnetic, wherein the axle (1) is coupled to the short-circuit cage (3) in a torsionally rigid manner by means of at least one plastic body (2), wherein the short-circuit cage (3) is designed as an external rotor for enclosing a device (6) for generating at least one rotating electromagnetic field, wherein the extension of the short-circuit cage (3) in the direction of the axle (1) is greater than 50 % of the internal diameter of the short-circuit cage (3).

2. A rotor according to claim 1, wherein the short-circuit cage (3) is surrounded on at least one side, in particular on the inside and/or outside, by said at least one plastic body (2), in particular is accommodated therein and/or is completely surrounded thereby.

3. A rotor according to claim 1 or 2, wherein said at least one plastic body (2) mechanically stabilises the short-circuit cage (3).

4. A rotor according to one of the preceding claims, wherein the short-circuit cage (3) is electrically insulated and/or encapsulated in an electrically insulating layer, wherein the electrical insulation is realised in particular by a metal nitride layer.

5. A rotor according to one of the preceding claims, wherein said at least one shaft (1) and said at least one plastic body (2) and, in particular, also said at least one fluid movement means are jointly designed in one piece.

6. A rotor according to one of the preceding claims, wherein said at least one fluid movement means is at least one agitator blade, at least one agitator vane, at least one agitator or conveyor vane, at least one screw, at least one eccentric, at least one rotary piston or at least one spiral.

7. A rotor according to one of the preceding claims, wherein the rotor has no metal and/or metal oxides except for the short-circuit cage (3) and/or an insulation of the short-circuit cage (3).

8. A rotor according to one of the preceding claims, wherein the rotor has at least one bearing shell and/or bearing bush, in particular made of ceramic and/or plastic.

9. A rotor according to one of the preceding claims, wherein the rotor is an agitator and/or an impeller.

10. A single-use container for holding fluid in an inner cavity, in particular with at least one opening into the interior, in particular for connecting a hose or with a hose, wherein the container has a container wall made of plastic and a containment can (7) as part of the container wall, wherein in the inner cavity of the container, enclosing the containment can (7), a rotor according to one of the preceding claims is arranged, the short-circuit cage (3) of which is arranged around the containment can (7), the containment can (7) having a wall thickness in the range from 0.75 to 2.5 mm, in particular from 1 to 1.5 mm, said at least one shaft (1) being rotatably coupled to the container by means of at least one bearing arranged in the container, in particular in the inner cavity of the container.

11. A container according to the preceding claim, wherein the container is designed such that it is not possible to remove the rotor from the inner cavity without destroying the walls of the container and/or wherein the container has only such openings which are smaller in cross-section than the diameter of the rotor.

12. A container according to one of claims 10 or 11, wherein said at least one bearing is a plain and/or roller bearing and/or a ball bearing and/or is formed from ceramic and/or plastic,

13. A container according to one of claims 10 to 12, wherein the rotor is not separated from the inner cavity.

14. A container according to any one of claims 10 to 13, wherein the rotor does not pierce the vessel wall.

15. An agitator comprising a container according to any one of claims 10 to 14, wherein outside the inner cavity of the container at least one, in particular nonpermanent magnetic, device (6) for generating at least one rotating electromagnetic field, in particular at least one induction coil or a ferromagnetic core with induction coil, is arranged in the containment can (7) and in the short-circuit cage (3) outside the inner cavity of the container, there being a distance in the range from 1 to 5 mm between the rotor and said at least one device (6) for generating at least one rotating electromagnetic field perpendicular to the axis (1), in particular 1.25 to 2 mm, in which the containment can (7) is arranged and/or the containment can (7) has a material thickness perpendicular to the axis in the range from 0.75 to 2.5 mm, in particular from 1 to 1.5 mm, and in that the short-circuit cage (3) is designed as an outer rotor for enclosingly receiving the device (6) for generating at least one rotating electromagnetic field, in particular said at least one induction coil and/or the ferromagnetic core with induction coil.

## Revendications

1. Rotor à usage unique comportant au moins un axe (1) et au moins une cage en court-circuit (3), la cage en court-circuit (3) comportant des tiges conductrices d'électricité et un matériau ferromagnétique disposé au moins entre les tiges, notamment au moins un noyau stratifié, et le rotor comportant au moins un moyen de déplacement du fluide couplé audit au moins un axe (1) pour transmettre le mouvement de rotation à un fluide, la cage en court-circuit (3) étant conçue pour être magnétique de façon non permanente, dans lequel l'axe (1) est couplé à la cage en court-circuit (3) de manière rigide en torsion au moyen d'au moins un corps en plastique (2), dans lequel la cage en court-circuit (3) est conçue comme un rotor externe pour enfermer un dispositif (6) destiné à générer au moins un champ électromagnétique rotatif, dans lequel l'extension de la cage en court-circuit (3) en direction de l'axe (1) est supérieure à 50 % du diamètre interne de la cage en court-circuit (3).

2. Rotor selon la revendication 1, dans lequel la cage en court-circuit (3) est entourée d'au moins un côté, en particulier à l'intérieur et/ou à l'extérieur, par ledit au moins un corps en plastique (2), en particulier y est logée et/ou en est complètement entourée.

3. Rotor selon les revendications 1 ou 2, dans lequel ledit au moins un corps en plastique (2) stabilise mécaniquement la cage en court-circuit (3).

4. Rotor selon l'une des revendications précédentes, dans lequel la cage en court-circuit (3) est isolée électriquement et/ou encapsulée dans une couche isolante électrique, l'isolation électrique étant notamment réalisée par une couche de nitrure métallique.

5. Rotor selon l'une des revendications précédentes, dans lequel ledit au moins un arbre (1) et ledit au moins un corps en plastique (2) et, en particulier, également ledit au moins un moyen de déplacement du fluide sont conçus conjointement en une seule pièce.

6. Rotor selon l'une des revendications précédentes, dans lequel ledit au moins un moyen de mouvement du fluide est au moins une pale d'agitateur, au moins une aube d'agitateur, au moins une aube d'agitateur ou de convoyeur, au moins une vis, au moins un excentrique, au moins un piston rotatif ou au moins une spirale.

7. Rotor selon l'une des revendications précédentes, dans lequel le rotor ne comporte pas de métal et/ou d'oxydes métalliques à l'exception de la cage en court-circuit (3) et/ou d'une isolation de la cage en court-circuit (3).

8. Rotor selon l'une des revendications précédentes, dans lequel le rotor comporte au moins une coque de roulement et/ou un coussinet, notamment en céramique et/ou en plastique.

9. Rotor selon l'une des revendications précédentes, dans lequel le rotor est un agitateur et/ou une roue.

10. Récipient à usage unique destiné à contenir un fluide dans une cavité intérieure, en particulier avec au moins une ouverture à l'intérieur, notamment pour raccorder un tuyau ou avec un tuyau, dans lequel le récipient possède une paroi de récipient en plastique et une boîte de confinement (7) faisant partie de la paroi de récipient, dans lequel dans la cavité intérieure du conteneur, enfermant le pot de confinement (7), est disposé un rotor selon l'une des revendications précédentes, dont la cage en court-circuit (3) est disposée autour du pot de confinement (7), le pot de confinement (7) ayant une épaisseur de paroi dans la plage de 0. 75 à 2,5 mm, en particulier de 1 à 1,5 mm, ledit au moins un arbre (1) étant couplé de manière rotative au récipient au moyen d'au moins un palier disposé dans le récipient, en particulier dans la cavité intérieure du récipient.

11. Récipient selon la revendication précédente, dans lequel le récipient est conçu de telle sorte qu'il n'est pas possible de retirer le rotor de la cavité intérieure sans détruire les parois du récipient et/ou dans lequel le récipient ne comporte que de telles ouvertures dont la section est inférieure au diamètre du rotor.

12. Récipient selon l'une des revendications 10 ou 11, dans lequel ledit au moins un palier est un palier lisse et/ou un palier à rouleaux et/ou un palier à billes et/ou est formé de céramique et/ou de plastique,

13. Récipient selon l'une des revendications 10 à 12, dans lequel le rotor n'est pas séparé de la cavité intérieure.

14. Récipient selon l'une quelconque des revendications 10 à 13, dans lequel le rotor ne perce pas la paroi de la cuve.

15. Agitateur comprenant une cuve selon l'une quelconque des revendications 10 à 14, dans lequel, à l'extérieur de la cavité intérieure de la cuve, au moins un dispositif (6), notamment magnétique non permanent, permettant de générer au moins un champ électromagnétique tournant, notamment au moins une bobine d'induction ou un noyau ferromagnétique avec bobine d'induction, est disposé dans le pot de confinement (7) et dans la cage en court-circuit (3) à l'extérieur de la cavité intérieure du récipient, une distance comprise entre 1 et 5 mm séparant le rotor et ledit au moins un dispositif (6) de génération d'au moins un champ électromagnétique rotatif perpendiculaire à l'axe (1), en particulier 1. 25 à 2 mm, dans laquelle la boîte de confinement (7) est disposée et/ou la boîte de confinement (7) a une épaisseur de matériau perpendiculaire à l'axe comprise entre 0,75 et 2,5 mm, en particulier entre 1 et 1,5 mm, et en ce que la cage en court-circuit (3) est conçue comme un rotor extérieur pour recevoir de manière enveloppante le dispositif (6) destiné à générer au moins un champ électromagnétique rotatif, en particulier ladite au moins une bobine d'induction et/ou le noyau ferromagnétique avec bobine d'induction.
